# FASCICULE DE BREVET EUROPEEN

(11) **EP 2 897 862 B1**
(45) Date de publication et mention de la délivrance du brevet: **02.11.2016**
(21) Numéro de dépôt: 13779267.7
(22) Date de dépôt: 19.09.2013
(51) Int. Cl.: B64C 1/12, B64D 13/00

(54) **PANNEAU DE CARROSSERIE POUR VÉHICULE DE TRANSPORT COMPRENANT UN DISPOSITIF D'ÉCHANGE THERMIQUE ET VÉHICULE DE TRANSPORT COMPRENANT UN TEL PANNEAU DE CARROSSERIE**
KARROSSERIEBLECH FÜR TRANSPORTFAHRZEUG MIT WÄRMETAUSCHERVORRICHTUNG UND TRANSPORTFAHRZEUG MIT EINEM SOLCHEN KARROSSERIEBLECH
BODY PANEL FOR TRANSPORT VEHICLE COMPRISING A HEAT EXCHANGER DEVICE AND TRANSPORT VEHICLE COMPRISING SUCH BODY PANEL

(30) Priorité: 19.09.2012 FR 1258791
(43) Date de publication de la demande: 29.07.2015
(73) Titulaire: Liebherr-Aerospace Toulouse SAS, 31200 Toulouse (FR)
(72) Inventeur: PELISSIER, Bertrand, F-31140 Saint Alban (FR)
(74) Mandataire: Cabinet BARRE LAFORGUE & associés
(86) Numéro de dépôt international: PCT/FR2013/052170
(87) Numéro de publication internationale: WO 2014/044981

(56) Documents cités:
- WO-A1-2008/140972
- FR-A1- 2 835 313
- JP-A- H0 325 096
- US-A- 4 819 720
- US-A- 6 042 315

## Description

L'invention concerne un panneau de carrosserie pour véhicule de transport -notamment un panneau de fuselage pour aéronef- comprenant un dispositif d'échange thermique. L'invention vise en général un véhicule de transport comprenant un tel panneau de carrosserie. L'invention concerne en particulier un aéronef comprenant un tel panneau de fuselage. L'invention concerne en particulier un panneau de fuselage pour un aéronef comprenant un fuselage dans lequel chaque panneau dudit fuselage formant la peau de l'aéronef est lié solidairement à au moins un cadre, au moins un longeron et/ou au moins une lisse de la structure primaire de l'aéronef.

Un tel panneau de carrosserie -notamment de fuselage pour aéronef- comprenant un dispositif d'échange thermique trouve ses applications dans le domaine de la construction et de la maintenance de véhicules de transport, en particulier dans le domaine de la construction et de la maintenance aéronautique dans lequel sont plus particulièrement recherchées des solutions d'échange thermique qui sont efficaces et qui ne perturbent pas l'aérodynamique de l'aéronef, en particulier d'un avion ou d'un hélicoptère. Cependant, un tel panneau de carrosserie trouve aussi ses applications dans la construction et l'équipement de tout autre moyen de transport, en particulier de moyens de transport par voie ferrée, de moyens de transport par voie routière et de moyens de transport par voie maritime.

Un tel panneau de carrosserie -notamment de fuselage pour aéronef- comprenant un dispositif d'échange thermique est en particulier recherché aux fins de pouvoir refroidir par échange thermique des équipements embarqués du véhicule de transport et produisant de la chaleur à l'intérieur du véhicule de transport.

On connaît déjà de US 5 702 073 un dispositif d'échange thermique comprenant un tube d'échange thermique monté en regard de la face intérieure de la peau extérieure d'un aéronef. Un tel dispositif présente un écarteur en forme d'arc s'étendant entre le tube d'échange thermique et la peau de l'aéronef et solidaire du tube d'échange thermique. Dans un tel dispositif, le tube d'échange thermique est fixé solidaire sur les cadres et lisses de la structure primaire de l'aéronef.

Un tel dispositif d'échange thermique d'un aéronef est mis en place à partir de l'intérieur de l'aéronef. Il n'est pas en contact avec l'air froid extérieur de l'aéronef et présente donc une efficacité d'échange thermique qui est limitée. Il ne permet pas non plus une installation facilitée de l'échangeur thermique lors de la pose du panneau de fuselage de l'aéronef.

WO 2008/140972 décrit un dispositif pour dissiper la chaleur produite par des éléments électriques d'un aéronef. Un tel dispositif comprend un tube de circulation d'un fluide s'étendant dans l'épaisseur de la peau de l'aile ou du fuselage de l'aéronef, ledit tube de circulation étant inclus dans un matériau conducteur thermique tel qu'une mousse de carbone. Un tel dispositif de dissipation de chaleur est complexe dans sa mise en place. Il nécessite d'utiliser un matériau conducteur thermique d'inclusion du tube de circulation. Dans un tel dispositif, la face extérieure de la paroi du tube de circulation du fluide échangeur de chaleur ne s'étend pas directement au contact de l'air extérieur. Un tel échangeur est donc de faible efficacité.

WO 2009/146843 décrit un dispositif de refroidissement d'un organe chaud dans un aéronef, ledit dispositif comprenant un circuit de circulation d'un fluide caloporteur en communication de fluide avec l'organe chaud de façon à pouvoir extraire la chaleur dégagée par l'organe chaud et échanger cette chaleur avec un dispositif d'échange thermique s'étendant dans l'épaisseur d'une couche interne du fuselage de l'aéronef. En particulier, la couche interne du fuselage incorporant le dispositif d'échange thermique est conformée pour suivre le contour interne du fuselage par lequel le dispositif d'échange thermique est couplé par échange thermique avec le milieu extérieur.

JP 03025096 divulgue un dispositif d'échange thermique agencé en contact thermique avec un panneau extérieur d'un aéronef.

L'invention vise donc un panneau de carrosserie pour véhicule de transport -notamment un panneau de fuselage pour aéronef- comprenant un dispositif d'échange thermique qui permette de dissiper vers l'extérieur du véhicule de transport au moins une partie de la chaleur dégagée par des équipements -notamment des équipements électriques et/ou électroniques- du véhicule de transport.

L'invention vise donc un panneau de carrosserie pour véhicule de transport -notamment un panneau de fuselage pour aéronef- comprenant un dispositif d'échange thermique adapté pour pouvoir refroidir les boucles liquides du véhicule de transport -notamment d'un aéronef-.

L'invention vise en particulier un tel panneau de fuselage pour aéronef comprenant un dispositif d'échange thermique adapté pour permettre un échange de chaleur amélioré et pour néanmoins conserver le profil général du fuselage et ne pas augmenter la trainée de ce dernier.

Ainsi, l'invention vise un tel panneau de fuselage pour aéronef comprenant un dispositif d'échange thermique adapté pour ne pas provoquer une baisse de charge de l'aéronef et pour ne pas diminuer le rendement de l'aéronef.

L'invention vise un tel panneau de fuselage pour aéronef comprenant un dispositif d'échange thermique de grande efficacité, notamment lorsque l'aéronef est en vol et que l'écart de température entre le milieu extérieur et le milieu intérieur de l'aéronef est important -notamment de plusieurs dizaines de degrés- et plus particulièrement lorsque l'aéronef est au sol et que l'écart de température entre le milieu extérieur et le milieu intérieur de l'aéronef est réduit.

L'invention vise un tel panneau de fuselage pour aéronef comprenant un dispositif d'échange thermique de grande efficacité lorsque l'aéronef est en conditions de vol et que l'air extérieur exerce un écoulement dynamique au contact du dispositif d'échange thermique.

L'invention vise un tel panneau de fuselage pour aéronef comprenant un dispositif d'échange thermique de grande efficacité adapté pour permettre une dissipation de la chaleur dégagée par des équipements de bord par convection naturelle même lorsque l'aéronef est au roulage au sol.

L'invention vise un tel panneau de fuselage pour aéronef comprenant un dispositif d'échange thermique adapté pour permettre une dissipation de la chaleur dégagée par des équipements de bord par convection forcée lorsque l'aéronef est en vol.

L'invention vise un tel panneau de carrosserie pour véhicule de transport -notamment un panneau de fuselage pour aéronef- comprenant un dispositif d'échange thermique susceptible de pouvoir être placé en remplacement d'un élément de carrosserie dudit véhicule de transport, notamment d'un panneau de fuselage d'un aéronef de type semi-monocoque, en particulier en remplacement d'un panneau du fuselage d'un aéronef s'étendant à la jonction de la voilure (dit « ventre mou ») dudit aéronef de type semi-monocoque.

L'invention vise un tel panneau de carrosserie pour véhicule de transport -notamment un panneau de fuselage pour aéronef- comprenant un dispositif d'échange thermique et présentant une tenue mécanique adaptée pour une utilisation sur un véhicule de transport en déplacement dans l'air.

L'invention vise un tel panneau de carrosserie pour véhicule de transport -notamment un panneau de fuselage pour aéronef- comprenant un dispositif d'échange thermique qui est accessible de l'extérieur du véhicule de transport et pour lequel la maintenance est facilitée.

L'invention vise à pallier les inconvénients précédemment évoqués en fournissant un panneau de carrosserie pour véhicule de transport -notamment un panneau de fuselage pour aéronef- comprenant un dispositif d'échange thermique d'efficacité améliorée.

L'invention vise également à atteindre tous ces objectifs à moindre coût, en proposant un tel panneau de carrosserie pour véhicule de transport -notamment un panneau de fuselage pour aéronef- comprenant un dispositif d'échange thermique qui soit de faible coût de revient.

L'invention vise également à proposer un tel panneau de carrosserie pour véhicule de transport -notamment un panneau de fuselage pour aéronef- comprenant un dispositif d'échange thermique qui soit compatible avec les contraintes de sécurité, avec les contraintes de réglementation -notamment aéronautique- et avec les contraintes de diminution de la consommation en carburant du véhicule de transport.

L'invention vise de surcroît à proposer une telle solution qui préserve les habitudes de travail des personnels notamment des personnels de maintenance.

Pour ce faire, l'invention concerne un panneau de carrosserie pour véhicule de transport -notamment pour aéronef- comprenant un dispositif d'échange thermique, ledit panneau de carrosserie présentant une plus petite dimension, dite épaisseur, s'étendant dans une première direction, dite direction radiale, et deux plus grandes dimensions s'étendant dans deux directions perpendiculaires entre elles et perpendiculaires à la direction radiale,
ledit panneau comprenant une plaque de support présentant une première face, dite face interne, principale destinée à être en contact avec un espace intérieur du véhicule de transport et une deuxième face, dite face externe, opposée à ladite face interne ;
le dispositif d'échange thermique est fixé sur la plaque de support par un dispositif de fixation et s'étend sur ladite face externe de la plaque de support de façon à s'étendre au contact d'un milieu extérieur du véhicule de transport, ledit dispositif d'échange thermique étant conformé pour permettre une circulation d'un fluide caloporteur dans un circuit de fluide caloporteur comprenant le dispositif d'échange thermique entre au moins une entrée de fluide caloporteur du dispositif d'échange thermique et au moins une sortie de fluide caloporteur du dispositif d'échange thermique et pour permettre une dissipation de chaleur du fluide caloporteur vers le milieu extérieur du véhicule de transport ;
caractérisé en ce que la plaque de support forme, sur sa face externe, un renfoncement s'étendant dans l'épaisseur de la plaque de support, ledit renfoncement étant adapté pour recevoir le dispositif d'échange thermique et de façon que le dispositif d'échange thermique ne s'étende pas au-delà du profil général de la carrosserie du véhicule de transport.

L'invention concerne donc un panneau de carrosserie pour véhicule de transport -notamment un panneau de fuselage pour aéronef-, ledit véhicule de transport étant apte à se déplacer et à entrainer un écoulement d'air en surface de sa carrosserie -notamment de son fuselage- lors de son déplacement. Le panneau de carrosserie de véhicule de transport selon l'invention comprend une plaque de support et un dispositif d'échange thermique distinct de ladite plaque de support et adapté pour pouvoir être directement en contact avec le milieu extérieur du véhicule de transport. Le panneau de carrosserie comprenant le dispositif d'échange thermique selon l'invention est donc adapté pour pouvoir remplacer un panneau de carrosserie -notamment un panneau de fuselage d'aéronef- de l'état de la technique. Un tel panneau de carrosserie pour véhicule de transport -notamment un tel panneau de fuselage pour aéronef- comprenant un dispositif d'échange thermique externe permet d'assurer la fonction de refroidissement d'un fluide caloporteur tout en respectant l'aérodynamisme du véhicule de transport -notamment de l'aéronef-. L'invention est en particulier avantageuse de ce point de vue par rapport à l'installation d'une prise d'air en creux sur un fuselage d'aéronef.

Avantageusement et selon l'invention, le dispositif d'échange thermique est supporté par la plaque de support. Le dispositif d'échange thermique est lié à la plaque de support et n'est pas supporté directement par une structure primaire (par exemple châssis) du véhicule de transport. Le panneau de fuselage permet donc un montage, un démontage et une maintenance facilités du dispositif d'échange thermique. Avantageusement et selon l'invention, le dispositif d'échange thermique s'étend à l'extérieur de l'espace pressurisé de l'aéronef.

Avantageusement et selon l'invention, le panneau présente une face principale s'étendant au contact du milieu extérieur de l'aéronef de forme arrondie convexe et présentant en section dans au moins un plan radial -notamment dans chacun des plans radiaux- comprenant la direction radiale du panneau de fuselage une courbure adaptée pour préserver l'aérodynamisme de l'aéronef. Avantageusement, un panneau de fuselage d'aéronef selon l'invention est adapté pour suivre le profil général du fuselage et pour ne pas modifier l'aérodynamisme de l'aéronef. En particulier, le panneau de fuselage comprenant le dispositif d'échange thermique présente, en section dans au moins un plan radial -notamment dans chacun des plans radiaux- comprenant la direction radiale du panneau de fuselage pour aéronef, une courbure inscrite dans la courbure générale du fuselage de l'aéronef.

La plaque de support -par exemple en matériau composite-rigide présente une forme obtenue par moulage adaptée pour recevoir le dispositif d'échange thermique et pour maintenir celui-ci de façon à conserver le profil aérodynamique général de l'aéronef.

Avantageusement et selon l'invention, le dispositif de fixation du dispositif d'échange thermique sur la plaque de support comprend des brides de fixation réparties à la surface du dispositif d'échange thermique et maintenant rigidement le dispositif d'échange thermique par rapport à la plaque de support.

Avantageusement et selon l'invention, chaque bride de fixation comprend :
- un jeu tangentiel autorisant des déplacements relatifs du dispositif d'échange thermique par rapport à la plaque de support selon une direction tangentielle perpendiculaire à ladite direction radiale,
- un dispositif de serrage radial appliquant au moins une face tangentielle solidaire du dispositif d'échange thermique et au moins une face tangentielle solidaire de la plaque de support en appui l'une sur l'autre avec une précontrainte en compression choisie de façon à produire un frottement statique du dispositif d'échange thermique sur la plaque de support :
   o suffisant pour maintenir en fonctionnement (dans les conditions d'utilisation du véhicule de transport) le dispositif d'échange thermique fixe par rapport à la plaque de support,
   ∘ autorisant les déplacements relatifs tangentiels du dispositif d'échange thermique par rapport à la plaque de support grâce au jeu tangentiel sous l'effet des dilatations thermiques différentielles entre le dispositif d'échange thermique et la plaque de support.

En particulier, l'invention résout les problèmes techniques concernant :
- les déplacements relatifs du dispositif d'échange thermique par rapport aux éléments de structure de l'aéronef -notamment les déplacements et déformations du dispositif d'échange thermique en aluminium dus à sa dilatation thermique différentielle lors de son exposition à une température distincte de la température des éléments de structure de l'aéronef ;
- la fixation et la tenue en forme du dispositif d'échange thermique soumis aux efforts aérodynamiques du véhicule -notamment de l'aéronef- ou à la dilatation thermique différentielle de la plaque d'échange thermique.

De façon inattendue, il s'avère qu'il est possible de concevoir le dispositif d'échange thermique et son dispositif de fixation de telle sorte que les efforts tangentiels générés par dilatation thermique du dispositif d'échange thermique soient de valeur supérieure aux efforts tangentiels subis par le dispositif d'échange thermique en fonctionnement (notamment en conditions de vol) et qu'il existe une valeur seuil d'effort tangentiel inférieure à celle entraînant un flambage du dispositif d'échange thermique diminuée d'une marge de sécurité suffisante et supérieure aux efforts tangentiels subis par le dispositif d'échange thermique en condition de vol en dessous de laquelle le dispositif d'échange thermique reste fixe par rapport à la plaque de support et au-dessus de laquelle le dispositif d'échange thermique se déplace par rapport à la plaque de support pour diminuer les contraintes générées par la dilatation du dispositif d'échange thermique.

Le dispositif de fixation du dispositif d'échange thermique sur la plaque de support est donc adapté pour permettre certains déplacements relatifs radiaux contrôlés entre les éléments de structure de l'aéronef et le dispositif d'échange thermique.

Les brides de fixation sont adaptées pour permettre un déplacement relatif entre le dispositif d'échange thermique et la plaque de support au niveau de chaque bride de fixation et pour contrôler le frottement statique entre le dispositif d'échange thermique et la plaque de support. En particulier, les brides de fixation sont adaptées pour permettre un tel déplacement relatif du dispositif d'échange thermique et de la plaque de support sous l'effet des dilatations différentielles du dispositif d'échange thermique et de la plaque de support, notamment lorsque le dispositif d'échange thermique est exposé à basse température dans les conditions de vol d'un aéronef.

Avantageusement et selon l'invention, le dispositif de serrage radial de chaque bride de fixation est un dispositif de serrage élastique appliquant lesdites faces tangentielles en appui l'une sur l'autre avec une précontrainte élastique en compression (dont la valeur dépend de la force de rappel élastique exercée par ce dispositif de serrage élastique), qui peut être ajustée par la raideur et/ou par une déformation initiale imposée à ce dispositif de serrage élastique.

Avantageusement et selon l'invention, le dispositif de serrage radial est adapté pour serrer deux faces tangentielles solidaires du dispositif d'échange thermique, l'une de chaque côté de la plaque de support, sur deux faces tangentielles d'un insert métallique traversant l'épaisseur de la plaque de support et fixé à cette dernière. Avantageusement et selon l'invention, chaque face tangentielle solidaire du dispositif d'échange thermique est formée d'une rondelle de frottement solidaire tangentiellement du boulon de serrage.

Avantageusement et selon l'invention, le dispositif de serrage radial comprend un boulon de serrage comprenant au moins un écrou de serrage en appui sur au moins un organe de rappel élastique en compression axiale tel qu'une rondelle Belleville, un empilement de telles rondelles -notamment montées tête bêche ou en série-, une rondelle ou un empilement de rondelles en élastomère, un ressort hélicoïdal de compression.

Avantageusement et selon l'invention, ledit boulon de serrage traverse une lumière traversante de la plaque de support -notamment formée par un alésage traversant dudit insert- en ménageant ledit jeu tangentiel, ce dernier étant formé entre ledit boulon de serrage et des parois internes de la lumière.

Avantageusement et selon l'invention, le boulon de serrage est un tirant présentant une tête évasée traversant un oeillet du dispositif d'échange thermique et adaptée pour appliquer le dispositif d'échange thermique contre la face externe de la plaque de support sous l'effet dudit boulon et de l'écrou de serrage. Avantageusement et selon l'invention, ce tirant comprend ledit écrou de serrage du côté de ladite face interne et ledit organe de rappel élastique en compression axiale en appui du côté de la face interne de la plaque de support avec une déformation en compression prédéterminée pour exercer ladite précontrainte en compression. Avantageusement et selon l'invention, ledit organe de rappel élastique en compression axiale est en appui sur une rondelle de frottement solidaire du tirant tangentiellement et elle-même en appui sur un insert métallique de la face interne de la plaque de support. De même une rondelle de frottement est de préférence interposée entre l'oeillet du dispositif d'échange thermique et la face tangentielle de l'insert de la plaque de support.

Avantageusement et selon l'invention, le dispositif de fixation comprend au moins une bride de serrage élastique formée d'un câble tendu en traction entre le dispositif d'échange thermique et la plaque de support de façon à appliquer les faces tangentielles du dispositif d'échange thermique et de la plaque de support en appui l'une sur l'autre avec une précontrainte élastique en compression (dont la valeur dépend de la force de rappel élastique exercée par câble tendu en traction). La souplesse en flexion du câble est adaptée pour permettre le déplacement relatif tangentiel du dispositif d'échange thermique sur la plaque de support. Sa tension et son élasticité longitudinale en traction garantissent le contact permanent du dispositif d'échange thermique et de la plaque de support et l'application de la précontrainte élastique en compression de valeur prédéterminée et adaptée pour produire un frottement statique du dispositif d'échange thermique sur la plaque de support.

Avantageusement et selon l'invention, la plaque de support est formée d'un matériau composite comprenant une âme en nid d'abeille s'étendant entre deux peaux rigides. Avantageusement, les peaux rigides sont formées d'un matériau composite formé d'une matrice -notamment d'une matrice en résine époxy- et de fibres de verre dispersées dans ladite matrice. La plaque de support est donc formée d'un matériau composite rigide et adapté pour pouvoir former le renfoncement apte à recevoir le dispositif d'échange thermique.

Avantageusement et selon l'invention, la plaque de support comprend au moins un organe de fixation, de préférence démontable -notamment par des vis et des écrous- de la plaque de support sur une structure primaire du véhicule de transport -notamment sur un châssis, sur un cadre, sur un longeron ou sur une lisse de l'aéronef-. Avantageusement, le dispositif de fixation du dispositif d'échange thermique sur la plaque de support, ainsi que l'organe de fixation de la plaque de support sur la structure primaire -notamment les longerons et les lisses de l'aéronef- sont adaptés pour résister aux efforts mécaniques appliqués sur le dispositif d'échange thermique en fonctionnement -notamment dans les conditions de vol de l'aéronef-.

Avantageusement et selon l'invention, la plaque de support présente au moins un orifice de passage d'au moins un conduit du circuit de fluide caloporteur au travers de la plaque de support, ledit conduit étant adapté pour pouvoir mettre en communication de fluide l'entrée de fluide caloporteur et la sortie de fluide caloporteur du dispositif d'échange thermique avec le circuit de fluide caloporteur.

Avantageusement, l'(les) orifice(s) de passage du(des) conduit(s) au travers de la plaque de support du fuselage de l'aéronef est(sont) situé(s) en zone non pressurisée de l'aéronef. De tel(s) orifice(s) de passage du(des) conduit(s) ne nécessite(nt) donc pas d'étanchéifier l'(les) orifice(s) de passage du(des) conduit(s) entre la face interne et la face externe de la plaque de support.

Les inventeurs ont observé que le dispositif d'échange thermique peut être notamment réalisé en aluminium en étant adapté pour pouvoir résister aux contraintes mécaniques subies par un aéronef en vol. L'invention permet d'obtenir un échangeur thermique performant, qui présente une résistance mécanique aux contraintes qui est suffisante et en même temps une masse réduite et adaptée pour ne pas provoquer une baisse de charge de l'aéronef et pour ne pas diminuer son rendement.

Avantageusement, dans une première variante d'un panneau selon l'invention, le dispositif d'échange thermique comprend :
- au moins un canal en communication de fluide caloporteur avec le circuit de fluide caloporteur de l'aéronef et s'étendant entre l'entrée et la sortie de fluide, chaque canal présentant en section droite transversale une forme polygonale -notamment une forme rectangulaire-, et ;
- une plaque thermo-conductrice s'étendant solidaire et au contact du(des) canaux sur une première face principale et au contact du milieu extérieur de l'aéronef sur une deuxième face principale opposée à ladite première face principale.

Avantageusement et selon cette première variante d'un dispositif selon l'invention, la plaque thermo-conductrice est formée d'un matériau choisi dans le groupe formé des alliages d'aluminium.

Avantageusement et selon cette première variante d'un dispositif selon l'invention, la plaque thermo-conductrice est solidaire de parois longitudinales du(des) canaux par brasage.

Avantageusement, dans une deuxième variante d'un panneau de fuselage selon l'invention, le dispositif d'échange thermique comprend :
- une plaque métallique ondulée, dite plaque métallique intérieure, adaptée pour pouvoir s'étendre en regard de la face externe de la plaque de support, et ;
- une plaque métallique extérieure sensiblement plane et adaptée pour pouvoir s'étendre au contact du milieu extérieur de l'aéronef ;
- lesdites plaques métalliques interne et extérieure étant liées l'une à l'autre par brasage de façon à former une pluralité de canaux en communication de fluide caloporteur avec le circuit de fluide caloporteur de l'aéronef et s'étendant entre l'entrée et la sortie de fluide.

Dans cette variante, le dispositif d'échange thermique est formé de deux plaques rigides soudées l'une à l'autre selon des lignes de soudure parallèles et équidistantes, et formant des canaux d'écoulement du fluide caloporteur entre l'entrée de fluide et de la sortie de fluide du dispositif d'échange thermique.

Avantageusement, dans une troisième variante d'un panneau de fuselage selon l'invention, le dispositif d'échange thermique comprend :
- une première plaque métallique adaptée pour pouvoir s'étendre en regard de la face externe de la plaque de support ;
- une deuxième plaque métallique, et ;
- s'étendant solidaire entre la première plaque métallique et la deuxième plaque métallique, une pièce intercalaire adaptée pour pouvoir maintenir la première plaque métallique et la deuxième plaque métallique écartée l'une par rapport à l'autre et pour permettre une circulation du fluide caloporteur entre l'entrée de fluide caloporteur et la sortie de fluide caloporteur.

L'invention s'étend par ailleurs à un véhicule de transport -notamment aéronef- comprenant un panneau selon l'invention.

L'invention concerne également un panneau de carrosserie pour véhicule de transport et un véhicule de transport comprenant un tel panneau de carrosserie caractérisés en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées représentant des modes de réalisation préférentiels de l'invention, donnés uniquement à titre d'exemples non limitatifs, et dans lesquelles :
- la figure 1 est une vue en perspective d'un panneau de fuselage selon l'invention et positionné sur le ventre mou d'un aéronef,
- la figure 2 est une vue en coupe transversale et en perspective d'un panneau de carrosserie selon l'invention,
- la figure 3 est un détail d'une vue en coupe d'une variante d'un dispositif d'échange thermique d'un panneau de carrosserie selon l'invention,
- la figure 4 est une vue en coupe d'un détail d'un premier mode de réalisation d'une bride de fixation d'un dispositif d'échange thermique sur une plaque de support d'un panneau de carrosserie selon l'invention,
- la figure 5 est une vue en coupe d'un détail d'un deuxième mode de réalisation d'une bride de fixation d'un dispositif d'échange thermique sur une plaque de support d'un panneau de carrosserie selon l'invention, la figure 6 en une vue en coupe d'un détail d'un troisième mode de réalisation d'une bride de fixation d'un dispositif d'échange thermique sur une plaque de support d'un panneau de carrosserie selon l'invention, et ;
- la figure 7 est une vue en coupe d'un détail d'un quatrième mode de réalisation d'une bride de fixation d'un dispositif d'échange thermique sur une plaque de support d'un panneau de carrosserie selon l'invention.

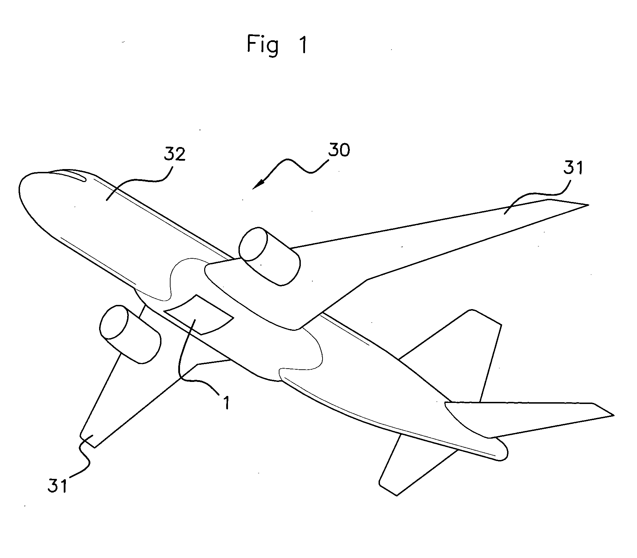

Un aéronef 30 représenté en figure 1 en situation de vol présente un fuselage 32 en contact avec le milieu extérieur. Un tel aéronef 30 présente, à titre d'exemple, un panneau 1 de carrosserie, dit panneau 1 de fuselage, selon l'invention formant une partie inférieure du fuselage 32 s'étendant entre les ailes 31 aussi dénommée « ventre mou » de l'aéronef 30. Cependant, un tel panneau 1 de fuselage peut être positionné en lieu et place de tout autre panneau 1 de fuselage de l'aéronef 30. Bien sûr, préférentiellement, le panneau 1 de fuselage selon l'invention est positionné de façon à former le fuselage 32 de l'aéronef 30 sans toutefois perturber l'aérodynamique de l'aéronef 30.

Un panneau 1 de carrosserie, notamment de fuselage 32 d'un aéronef 30 représenté en figure 1, est monté solidaire de la structure primaire du véhicule de transport -notamment d'un aéronef 30-. Un tel panneau 1 de fuselage 32 d'un aéronef 30 présente une face principale 29 s'étendant au contact du milieu 5 extérieur de l'aéronef 30. Le panneau 1 de fuselage 32 comprend une plaque 2 de support fixée par des moyens connus en eux-mêmes de l'homme du métier -notamment par des vis et des écrous- sur les lisses et les longerons soutenant le fuselage 32 de l'aéronef 30. Un tel panneau 1 de fuselage selon l'invention présente un dispositif 6 d'échange thermique s'étendant en regard du milieu extérieur de l'aéronef 30. Un tel dispositif 6 d'échange thermique en contact direct avec l'air du milieu extérieur de l'aéronef 30 présente un échange thermique favorisé. En outre, un tel dispositif 6 d'échange thermique en contact direct avec l'air du milieu extérieur de l'aéronef 30 permet un drainage des fuites de fluide caloporteur vers l'extérieur de l'aéronef 30. La maintenance d'un tel dispositif 6 d'échange thermique est facilitée en raison de la meilleure accessibilité par les personnels de maintenance dès lors que l'aéronef est au sol.

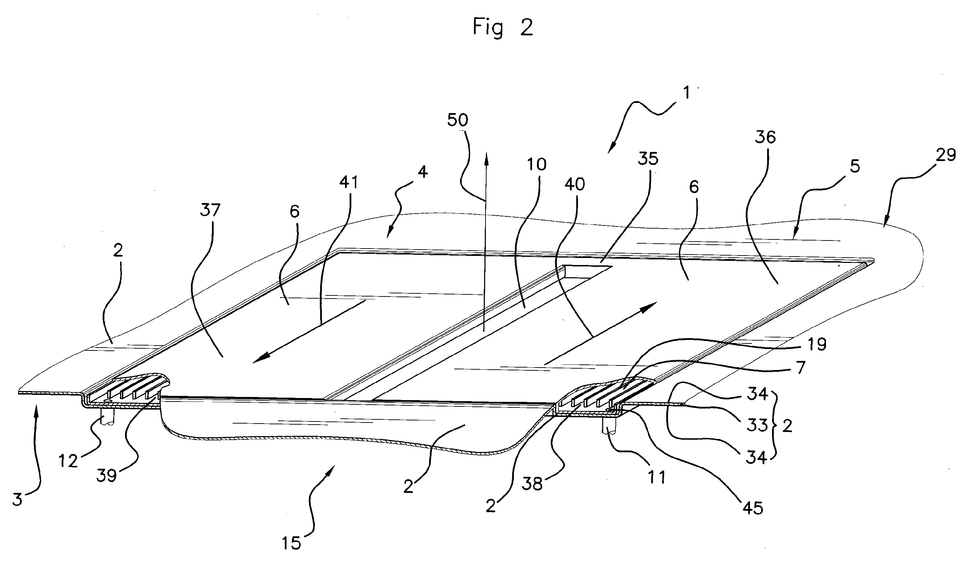

Un panneau 1 de fuselage selon l'invention est représenté en figure 2. Le panneau 1 de fuselage présente une plaque 2 de support adaptée pour pouvoir être fixée sur la structure primaire -notamment sur les lisses et/ou sur les longerons- d'un aéronef 30. La plaque 2 de support est fixée sur la structure primaire par des moyens conventionnels de fixation d'un panneau de fuselage sur la structure primaire d'un aéronef 30, par exemple par des vis et des écrous. Le panneau 1 de fuselage pour aéronef présente une plus petite dimension, dite épaisseur, s'étendant dans une première direction 50 radiale, et deux plus grandes dimensions s'étendant dans deux directions perpendiculaires entre elles et perpendiculaires à la direction 50 radiale.

La plaque 2 de support présente une première face 3 principale interne adaptée pour pouvoir être en contact avec un espace 15 intérieur de l'aéronef 30 et une deuxième face, dite face 4 externe, opposée à la face 3 interne. La plaque 2 de support présente un renfoncement 10 formant un logement adapté pour recevoir le dispositif 6 d'échange thermique. Le dispositif 6 d'échange thermique positionné dans le renfoncement 10 de la plaque 2 de support forme la surface extérieure du panneau 1 de fuselage s'étendant en regard du milieu 5 extérieur de l'aéronef 30 et de façon à ne pas diminuer l'aérodynamique de l'aéronef 30.

Le panneau 1 de fuselage peut présenter une pluralité de renfoncements 10. Chaque renfoncement 10 de la pluralité de renfoncements 10 accueille un dispositif 6 d'échange thermique s'étendant sur la face 4 externe de la plaque 2 de support et au contact du milieu 5 extérieur de l'aéronef 30, chaque dispositif 6 d'échange thermique étant conformé pour pouvoir permettre une circulation d'un fluide 7 caloporteur dans un circuit 8 de fluide caloporteur du dispositif 6 d'échange thermique entre une entrée 11 de fluide 7 caloporteur et une sortie 12 de fluide 7 caloporteur et adapté pour permettre une dissipation de chaleur du fluide 7 caloporteur vers le milieu 5 extérieur de l'aéronef 30.

La plaque 2 de support est une structure du type « sandwich » comprenant deux peaux 34 ou semelles rigides. Ces deux peaux 34 rigides peuvent être formées d'un matériau composite, par exemple d'une résine époxy renfermant une charge de fibres de verre. La plaque 2 de support comprend aussi une âme 33 en nid d'abeille s'étendant entre les deux peaux 34 rigides et solidaire des deux peaux 34 rigides. A titre d'exemple non limitatif l'âme 33 en nid d'abeille est formée de Nomex^{®}.

La plaque 2 de support peut aussi comprendre une quantité d'un matériau composite s'étendant dans un espace poreux de l'âme 33 en nid d'abeille adaptée pour renforcer la rigidité de la plaque 2 de support.

La plaque 2 de support est en liaison mécanique avec au moins un élément de structure primaire de l'aéronef 30 par des organes de fixation -notamment du type vis/écrous-. La plaque 2 de support est conformée pour que le dispositif 6 d'échange thermique suive le profil aérodynamique de l'aéronef 30 et ne perturbe pas celui-ci. En particulier, la plaque 2 de support peut être courbe selon deux axes perpendiculaires de façon à permettre l'insertion de un ou plusieurs dispositif(s) 6 d'échange thermique.

Le panneau 1 de fuselage comprend un dispositif 6 d'échange thermique adapté pour permettre un transfert de chaleur d'un fluide 7 caloporteur circulant dans le dispositif 6 d'échange thermique vers un fluide froid s'écoulant à l'extérieur du fuselage 32 d'un aéronef 30. Le dispositif 6 d'échange thermique est formé d'un alliage d'aluminium-. A titre d'exemple non limitatif, le fluide 7 caloporteur circulant dans le dispositif 6 d'échange thermique est un mélange de propylène/éthylène glycol et d'eau en proportion volumique de 60/40.

Un dispositif 6 d'échange thermique selon l'invention a pour fonction de permettre un transfert d'énergie calorifique d'un fluide chaud vers un fluide froid s'écoulant à l'extérieur du véhicule de transport -notamment d'un aéronef 30-. Lors de ce transfert d'énergie calorifique, la température du fluide chaud diminue et la température du fluide froid augmente. Le fluide chaud et le fluide froid sont séparés l'un de l'autre par une paroi en alliage d'aluminium. Par convection forcée du fluide chaud dans le circuit de fluide caloporteur, le fluide chaud transfert son énergie calorifique à la paroi en alliage d'aluminium, qui conduit la chaleur dans son épaisseur. Sur la face extérieure du dispositif 6 d'échange thermique, l'énergie calorifique est dissipée par convection forcée au contact du fluide froid lorsque le véhicule de transport est en mouvement -notamment lorsque l'aéronef est en vol- ou par convection naturelle lorsque le véhicule de transport -notamment l'aéronef- est à l'arrêt.

Dans un panneau 1 de fuselage comprenant un dispositif 6 d'échange thermique selon l'invention, le dispositif 6 d'échange thermique s'étend à l'extérieur de la paroi de fuselage 32 de l'aéronef 30, solidaire de la plaque 2 de support formant le fuselage 32 de l'aéronef 30, mais sans solidarisation directe du dispositif 6 d'échange thermique sur la structure primaire de l'aéronef 30. Dans un panneau 1 de fuselage comprenant un dispositif 6 d'échange thermique selon l'invention, les contraintes exercées par le milieu extérieur sur le dispositif 6 d'échange thermique sont transmises sur la plaque 2 de support et non sur la structure primaire de l'aéronef 30.

Le dispositif 6 d'échange thermique comprend une pluralité de canaux 19 s'étendant entre une entrée 11 de fluide 7 caloporteur dans le dispositif 6 d'échange thermique et une sortie 12 de fluide 7 caloporteur du dispositif 6 d'échange thermique et adaptés pour permettre une circulation du fluide 7 caloporteur dans le dispositif 6 d'échange thermique entre l'entrée 11 de fluide 7 caloporteur et la sortie 12 de fluide 7 caloporteur.

Dans un panneau 1 de fuselage représenté en figure 2, le dispositif 6 d'échange thermique comprend une pluralité de canaux 19 s'étendant coplanaires, sensiblement parallèlement les uns aux autres et parallèles aux deux faces principales -face 3 interne et face 4 externe- de la plaque 2 de support. Les canaux 19 forment une première série 36 de canaux 19 adaptée pour permettre une circulation de fluide 7 caloporteur dans un premier sens 40 entre :
- un organe 38 de distribution de fluide 7 caloporteur en communication de fluide avec l'entrée 11 de fluide 7 caloporteur, et ;
- un organe 35 intermédiaire de collecte du fluide 7 caloporteur en sortie des canaux 19 de la première série 36 de canaux 19 et de distribution de ce fluide 7 caloporteur dans les canaux 19 d'une deuxième série 37 de canaux 19 adaptée pour permettre une circulation de fluide 7 caloporteur entre l'organe 35 intermédiaire de transfert du fluide 7 caloporteur et un organe 39 de collecte du fluide 7 caloporteur refroidi dans un deuxième sens 41 sensiblement opposé au premier sens 40 et en communication de fluide avec la sortie 12 de fluide 7 caloporteur du circuit 8 de fluide 7 caloporteur.

Ainsi, le fluide 7 caloporteur du circuit 8 de fluide entre dans le dispositif 6 d'échange thermique par l'entrée 11 de fluide, est réparti dans l'organe 38 de distribution entre les canaux 19 de la première série 36 de canaux 19, s'écoule dans les canaux 19 dans lesquels il est refroidi, débouche dans l'organe 35 intermédiaire du circuit 8 de fluide dans lequel il est guidé pour pouvoir s'écouler dans les canaux 19 de la deuxième série 37 de canaux 19, dans lesquels il est encore refroidi, vers l'organe 39 de collecte et la sortie 12 de fluide 7 caloporteur du dispositif 6 d'échange thermique.

La direction d'allongement principale des canaux 19 peut s'étendre sensiblement parallèlement à la direction d'écoulement du fluide extérieur et à la direction de déplacement du véhicule de transport -notamment de l'aéronef 30-. Le fluide 7 caloporteur peut s'écouler dans les canaux 19 selon le sens de déplacement habituel du véhicule de transport -notamment de l'aéronef 30-. On parle alors de dispositif 6 d'échange thermique à « contrecourant et simple passe ». Le fluide 7 caloporteur peut s'écouler dans les canaux 19 selon le sens opposé de déplacement habituel du véhicule de transport -notamment de l'aéronef 30-. On parle alors de dispositif 6 d'échange thermique à « courants parallèles et simple passe ».

Il est aussi possible que la direction d'allongement principale des canaux 19 s'étende sensiblement perpendiculairement à la direction de déplacement du véhicule de transport -notamment de l'aéronef 30-. On parle alors de dispositif 6 d'échange thermique à « courants croisés et simple passe ».

Il est aussi possible que le dispositif 6 d'échange thermique présente trois séries successives de canaux 19 formant un « U » dans lequel le fluide 7 caloporteur s'écoule alternativement selon une direction perpendiculaire -respectivement parallèle-, puis selon une direction parallèle -respectivement perpendiculaire- puis selon une direction perpendiculaire -respectivement parallèle-à la direction de déplacement du véhicule de transport. On parle alors de dispositif 6 d'échange thermique « en U » à co-courant ou à contre-courant.

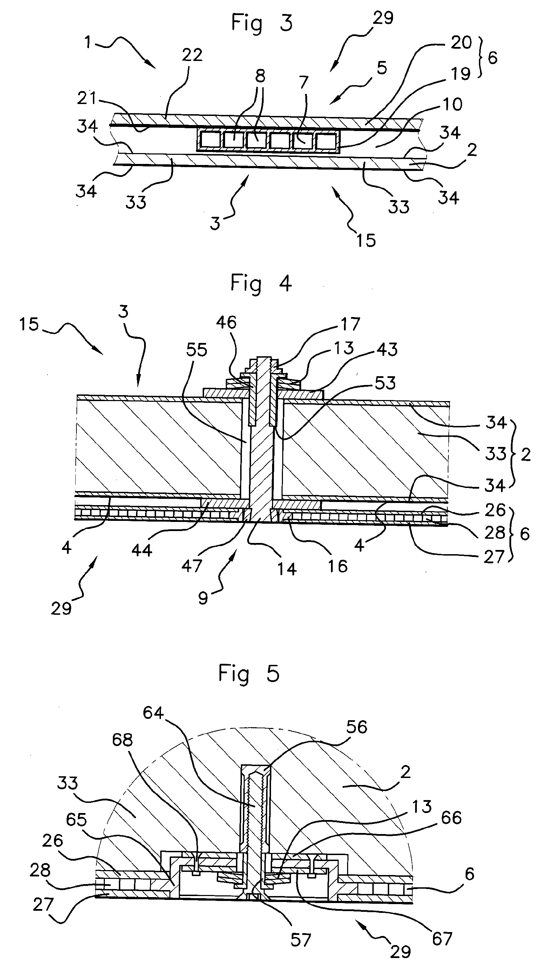

Dans une première variante d'un panneau 1 de fuselage représentée en figure 3, le dispositif 6 d'échange thermique -dit dispositif plaque et tube- est formé de tubes 19 extrudés brasés sur une plaque 20 thermo-conductrice rigide, présentant une première face 21 principale s'étendant en regard des tubes 19 extrudés brasés et une deuxième face 22 principale, opposée à ladite première face 21 principale, et s'étendant vers le milieu 5 extérieur de l'aéronef. Dans cette première variante d'un panneau 1 de fuselage, les tubes 19 extrudés du dispositif 6 d'échange thermique s'étendent en regard de la plaque 2 de support et sont protégés d'agressions extérieures par la plaque 20 thermo-conductrice. Les tubes 19 extrudés du dispositif 6 d'échange thermique selon cette première variante d'un panneau 1 de fuselage selon l'invention présentent en section droite transversale une forme sensiblement rectangle de façon que l'épaisseur de fluide 7 caloporteur dans le circuit 8 de fluide 7 caloporteur soit réduite et que l'efficacité du transfert d'énergie thermique soit améliorée. Les tubes 19 extrudés formant le circuit 8 de fluide 7 caloporteur présentent un axe longitudinal sensiblement perpendiculaire au flux d'air en déplacement le long de la paroi extérieure du fuselage 32 de l'aéronef 30 en déplacement. Les tubes 19 extrudés sont solidarisés par brasage avec la plaque 20 thermo-conductrice. Le dispositif 6 d'échange thermique du panneau 1 de fuselage représenté en figure 3 s'étend dans le renfoncement 10 d'une plaque 2 de support formée d'une âme 33 en nid d'abeille. Dans cette première variante, le dispositif 6 d'échange thermique s'étend à l'extérieur de la plaque 2 de support du fuselage 32 de l'aéronef 30.

Dans le mode de réalisation d'une bride de fixation de la figure 4, le dispositif 6 d'échange thermique comprend :
- une première plaque 26 métallique -notamment en alliage d'aluminium- s'étendant en regard de la face 4 externe de la plaque 2 de support de l'aéronef, et ;
- une deuxième plaque 27 métallique -notamment en alliage d'aluminium- formant le dispositif 6 d'échange thermique avec la première plaque 26 métallique, et ;
- s'étendant solidaire entre la première plaque 26 et la deuxième plaque 27 métalliques, une pièce 28 intercalaire adaptée pour pouvoir maintenir la première plaque 26 métallique et la deuxième plaque 27 métallique écartée l'une par rapport à l'autre et pour permettre une circulation du fluide 7 caloporteur dans des canaux du dispositif 6 d'échange thermique entre une entrée de fluide 7 caloporteur et une sortie de fluide 7 caloporteur, et ;
- au moins un oeillet de réception de la tête évasée d'une bride 14 de fixation, ledit oeillet comprenant une bague 47 de centrage de la bride 14 de fixation dans l'oeillet et un joint 16 périphérique d'étanchéité du dispositif 6 d'échange thermique.

Dans le mode de réalisation de la figure 4, la plaque 2 de support comprend :
- deux peaux 34 rigides s'étendant solidaires sur les deux faces principales d'une âme 33 en nid d'abeille, et
- une lumière 55 traversante de réception de la bride 9 de fixation ménagée dans l'épaisseur de l'âme 33 et des peaux 34 de la plaque 2 de support et débouchante sur les deux faces principales de cette dernière.

La bride 9 de fixation de la figure 4 comprend un boulon 14 de serrage radial comprenant une tige et un écrou 17, une rondelle 44 de frottement tangentiel interposée entre la première plaque 26 du dispositif 6 d'échange thermique et la peau 34 s'étendant sur la face 4 externe de la plaque 2 de support. La bride 9 de fixation comprend aussi une rondelle 43 de frottement tangentiel interposée entre un jeu 13 de rondelles de rappel élastique en compression axiale montées en série et la face 3 interne de la plaque 2 de support. La bride 9 de fixation comprend une cale 46 de compression du jeu 13 de rondelles maintenue et serrée sur la tige du boulon par un écrou 17 (comprenant le cas échéant une goupille d'arrêt). La cale 46 de compression présente à une extrémité interne une couronne recevant l'écrou 17 et comprimant les rondelles 13 élastiques. La cale 46 présente un alésage traversant pour le passage de l'extrémité filetée de la tige du boulon 14 de moindre diamètre. Cette tige présente un épaulement 53 en saillie radialement par rapport à cette extrémité filetée. L'extrémité de la cale 46 opposée à la couronne vient en butée en appui contre l'épaulement de la tige du boulon 14. En conséquence, quel que soit le couple de serrage de l'écrou 17, la position de la couronne de la cale 46 est prédéterminée lorsque la cale 46 est en butée sur l'épaulement 53 de la tige. Cette position de la couronne de la cale 46 détermine, après serrage de l'écrou 17, avec l'épaisseur de la rondelle 43 de frottement tangentiel, la hauteur axiale recevant les rondelles élastiques.

La précontrainte axiale exercée par le boulon 14 dépend donc de la hauteur au repos du jeu 13 de rondelles élastiques, de la raideur de ce jeu 13 de rondelles élastiques et de la hauteur axiale définie par la cale 46 de compression (qui impose une déformation prédéterminée des rondelles élastiques). Ainsi, la valeur de ladite précontrainte de serrage axial est déterminée par ajustement de l'écrasement des rondelles 13 élastiques, qui ne dépend que de la hauteur de la cale 46 de compression et ne dépend pas du couple de serrage de l'écrou 17.

Un jeu radial est ménagé entre la tige du boulon 14 et la paroi interne de la lumière 55. La rondelle 43 interne de frottement tangentiel est solidaire en translation tangentielle de la tige du boulon 14 via la cale 46 qui traverse cette rondelle 43 avec un jeu minimum. En conséquence, tout déplacement relatif de la peau 34 par rapport à la tige du boulon 14 se fait par frottement entre la rondelle 43 de frottement tangentiel et la peau 34. Cette possibilité de déplacement tangentiel dépend donc du frottement statique imparti au contact de cette rondelle 43 de frottement et de la peau 34, dont la valeur est définie par la précontrainte de compression axiale et par le coefficient de frottement statique de ce contact.

La rondelle 44 externe de frottement tangentiel est aussi solidaire en translation tangentielle de la tige du boulon 14 et de la première plaque 26 du dispositif 6 d'échange thermique. Cette rondelle 44 peut par contre se déplacer tangentiellement par rapport à la peau 34 externe de la plaque 2 de support avec laquelle elle est en contact. La possibilité de déplacement tangentiel du dispositif 6 d'échange thermique par rapport à la plaque 2 de support dépend donc aussi du frottement statique imparti au contact entre la rondelle 44 externe de frottement tangentiel et la peau 34 dont la valeur est définie par la précontrainte de compression axiale impartie par le boulon 14 et les rondelles 13 élastiques au niveau de ce contact, la bague 47 appliquant la rondelle 44 contre la peau 34. La valeur de la précontrainte dépend aussi du coefficient de frottement statique de ce contact (matériaux, états de surface...).

Dans le mode de réalisation de la bride 9 de fixation représenté en figure 5, la plaque 2 de support présente un tube 56 borgne noyé par collage dans l'âme 33 en nid d'abeille, ledit tube 56 présentant un alésage borgne taraudé de réception d'une vis 64 de serrage radial à tête conique. La bride 9 de fixation représentée en figure 5 comprend aussi une cale 57 de compression présentant un alésage traversé par la vis 64, et sur laquelle la tête conique de la vis 64 est en appui. La cale 57 est elle-même en appui sur un jeu 13 de rondelles élastiques en compression axiale.

Les plaques 26, 27 du dispositif 6 d'échange thermique présentent une lumière de grande dimension pour le passage de la bride 9 de fixation. Une bague 65 est insérée dans cette lumière pour former un lamage de réception de la tête de la vis 64 et des rondelles 13 élastiques en compression. Cette bague 65 est couverte de chaque côté de deux rondelles 66, 67 dont elle est solidaire grâce à des vis 68. Une première rondelle 66 interne de frottement tangentiel est au contact de l'âme 33 de la plaque 2 de support. Cette rondelle 66 interne constitue une rondelle de frottement tangentiel. La rondelle 67 externe sert d'appui pour les rondelles 13 élastiques. La bague 65 et les deux rondelles 66, 67 sont traversées par la vis 64 et la cale 57 en ménageant un jeu radial permettant le déplacement de la bague 65 (par frottement de la rondelle 66 sur l'âme 33) par rapport à la vis 64 et à la cale 57, elles-mêmes solidaires de l'âme 33 par l'intermédiaire du tube 56 de serrage monté sans jeu dans l'âme 33.

La cale 57 est par ailleurs en butée axiale contre le tube 56 lorsque la vis 64 est serrée. La hauteur ménagée entre la face de la cale 57 en appui sur les rondelles 13 élastiques et la rondelle 67 externe, après serrage de la vis 64 dans le tube 56, détermine la déformation en compression axiale des rondelles 13 élastiques, et donc la valeur de la précontrainte de serrage élastique en compression impartie entre la rondelle 66 de frottement tangentiel et l'âme 33.

Les dimensions de la cale 57 de compression sont appropriées pour obtenir -en combinaison avec les dimensions de la vis 14 de serrage, du jeu 13 de rondelles élastiques et avec la raideur de ces rondelles élastiques- une valeur appropriée de ladite précontrainte élastique en compression. Le lamage de réception de la tête conique de la vis 14 est de préférence fermé par un couvercle garantissant la continuité de forme externe du dispositif 6 d'échange thermique.

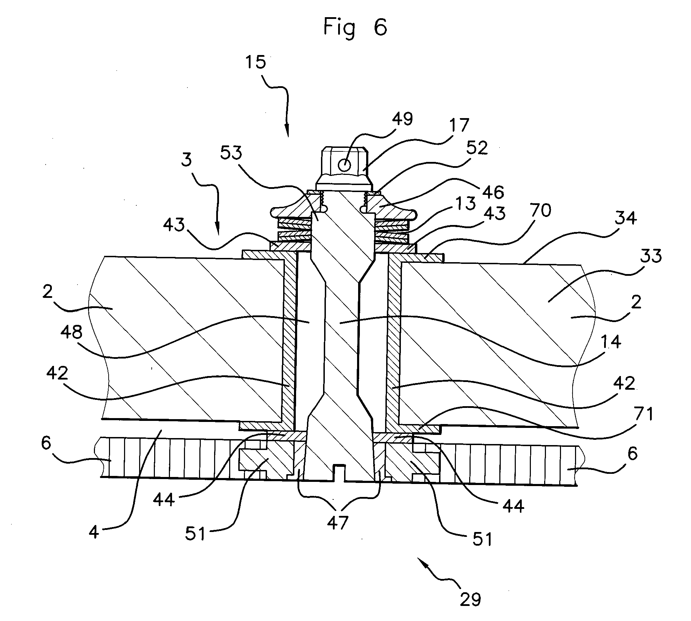

Dans le mode de réalisation de la bride 9 de fixation représenté en figure 6, la plaque 2 de support comprend un insert 42 présentant un alésage traversant et débouchant sur les deux faces principales 3, 4 de ladite plaque 2 de support. L'insert 42 forme une lumière 48 interne de réception du boulon 14 de serrage radial démontable et deux couronnes 70 interne et 71 externe recouvrant les faces 3, 4 de la plaque 2 de support.

Le dispositif 6 d'échange thermique comprend un joint 51 circulaire d'étanchéité de l'oeillet de fixation du dispositif 6 d'échange thermique sur la plaque 2 de support, ledit joint s'étendant entre deux tôles d'alliage d'aluminium et étant adapté pour permettre le passage du boulon 14 de serrage et pour assurer l'étanchéité du circuit de fluide caloporteur. Le dispositif 6 d'échange thermique comprend aussi une bague 47 de montage et de centrage de la tête du boulon 14. Les rondelles 43 et 44 de frottement tangentiel sont adaptées pour permettre un déplacement relatif tangentiel du dispositif 6 d'échange thermique en surface de la plaque 2 de support sous l'effet des dilatations différentielles du dispositif 6 d'échange thermique et de la plaque 2 de support. La rondelle 44 externe de frottement tangentiel est interposée entre le joint 51 solidaire du dispositif 6 d'échange thermique et une face tangentielle externe de la couronne 71 externe de l'insert 42 solidaire de la plaque 2 de support. La rondelle 44 externe de frottement tangentiel est traversée sans jeu radial par la tête conique de la vis du boulon 14. Elle est donc solidaire de cette vis dans ses déplacements tangentiels, et peut se déplacer par frottement contre la couronne 71 externe de la plaque 2 de support, selon la valeur de frottement statique imparti sur ce contact.

Le boulon 14 comprend une tige traversant la lumière 48 avec un jeu radial, et une extrémité interne filetée recevant un écrou 17, une rondelle 52 de serrage et une cale 46 de compression en butée axiale contre un épaulement radial 53 de la vis du boulon 14. Un jeu de rondelles 13 élastiques en compression axiale montées tête-bêche est placé entre la cale 46 de compression et la rondelle 43 interne de frottement tangentiel. Cette rondelle 43 de frottement tangentiel est au contact de la face interne de la couronne 70 interne de l'insert 42. Elle est en outre traversée sans jeu radial par la vis du boulon 14 et est donc solidaire de cette dernière dans ses déplacements tangentiels. Le fonctionnement de ce mode de réalisation est donc similaire à celui de la figure 4 à l'exception du fait que les faces tangentielles en contact avec les rondelles 43, 44 de frottement sont celles des couronnes 70, 71 de l'insert 42 à la place des peaux 34 de la plaque 2 de support.

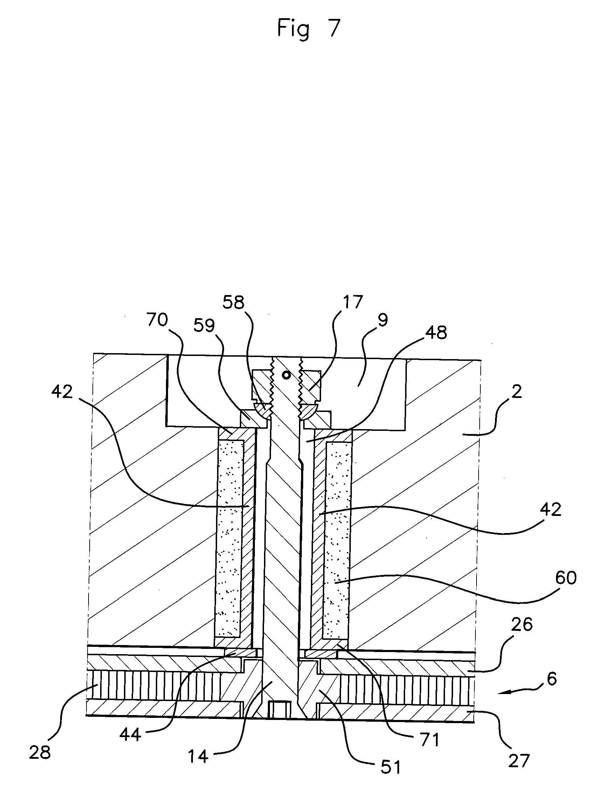

Dans le mode de réalisation de la bride 9 de fixation représenté en figure 7, la bride 9 de fixation comprend une rotule 58, 59 interposée entre l'insert 42 de la plaque 2 de support et l'écrou 17 de serrage. L'insert 42 est fixé par collage 60 à la plaque 2 de support. La rondelle 44 externe de frottement tangentiel est là encore au contact de la face externe de la couronne 71 externe de l'insert 42. La rotule 58, 59 est adaptée pour permettre un pivotement du boulon 14 de serrage lors du déplacement tangentiel relatif du dispositif 6 d'échange thermique et de la plaque 2 de support en frottement sur la rondelle 44 externe de frottement tangentiel.

Dans ce mode de réalisation, la précontrainte de compression axiale appliquant la rondelle 44 de frottement tangentiel sur la couronne 71 de l'insert 42 est ajustée par le couple de serrage de l'écrou 17 sur la tige du boulon 14 et dépend de l'élasticité en compression axiale de la rotule 58, 59. La rotule 58, 59 est formée d'une coupelle 59 en contact sur la couronne 70 interne de l'insert 42, et d'une calotte 58 sphérique reçue dans la coupelle 59. La calotte 58 sphérique peut présenter une élasticité en compression axiale pour ajuster ladite précontrainte. De préférence, le frottement statique entre la coupelle 59 et la couronne 70 interne de l'insert 42 est supérieur à celui entre la rondelle 44 de frottement tangentiel et la couronne 71 externe de l'insert 42. De la sorte, lorsque les efforts tangentiels dus aux dilatations thermiques différentielles dépassent le frottement statique de la rondelle 44 de frottement tangentiel, cette dernière peut se déplacer tangentiellement en glissant sur la couronne 71 externe du fait du jeu radial entre la tige du boulon 14 et l'insert 42, mais la coupelle 59 de la rotule reste en place par rapport à la couronne 70 interne.

Dans un autre mode de réalisation non représenté, le dispositif de fixation comprend au moins une bride de serrage élastique formée d'un câble tendu en traction entre le dispositif d'échange thermique et la plaque de support de façon à appliquer les faces tangentielles du dispositif d'échange thermique et de la plaque de support en appui l'une sur l'autre avec une précontrainte élastique en compression (dont la valeur dépend de la force de rappel élastique exercée par câble tendu en traction). Le câble est traversant longitudinalement dans un insert de la plaque de support. L'une des extrémités longitudinales du câble présente une platine solidaire -notamment par des rivets- du dispositif d'échange thermique, l'autre des extrémités longitudinales étant sertie solidaire sur la face interne de l'insert. La souplesse en flexion du câble est adaptée pour permettre le déplacement tangentiel du dispositif d'échange thermique sur la plaque de support. Sa tension et son élasticité longitudinale en traction garantissent le contact permanent du dispositif d'échange thermique et de la plaque de support et l'application d'une précontrainte élastique en compression de valeur prédéterminée et adaptée pour produire un frottement statique de valeur appropriée du dispositif d'échange thermique sur la plaque de support.

Dans tous les modes de réalisation représentés, la bride 9 de fixation est adaptée pour pouvoir fixer le dispositif 6 d'échange thermique sur la plaque 2 de support en autorisant un déplacement tangentiel relatif en contrôlant le frottement statique tangentiel entre ces pièces. Ladite précontrainte de compression axiale déterminant le frottement statique peut être obtenue par un dimensionnement approprié du boulon 14 de serrage radial, des rondelles 43, 44 de frottement tangentiel, de l'insert 42, de l'organe 13 de rappel élastique en compression axiale, de la cale 46 de compression et de la butée 53 de réception de la cale 46 et par la raideur de l'organe 13 de rappel élastique. La valeur de la précontrainte est ajustée par la déformation initiale impartie aux organes élastiques exerçant cette précontrainte.

Dans une bride 9 de fixation selon l'invention, le boulon 14 de serrage radial est un tirant 14 pouvant être en aluminium, l'insert 42 de la plaque 2 de support pouvant être en acier, les rondelles 43, 44 de frottement tangentiel pouvant être en acier revêtu de téflon ou de graisse et l'organe 13 de rappel élastique en compression axiale de la cale 46 de compression pouvant être une rondelle ou un empilement de rondelles ressort ou rondelles « Belleville » en acier montées en série ou tête-bêche. La précontrainte élastique peut être en tout ou partie exercée par d'autres organes de rappel élastique (bloc élastique en compression, ressort...) et/ou par la tige du boulon 14. Les rondelles 43, 44 de frottement tangentiel forment les seules pièces d'usure.

Dans une deuxième variante non représentée d'un panneau de fuselage selon l'invention, le dispositif d'échange thermique -dit dispositif « plaque et plaque »- est formé de deux tôles d'alliage d'aluminium soudées l'une à l'autre par diffusion. On fabrique un tel dispositif d'échange thermique du type « plaque et plaque » en réalisant un dépôt d'un agent inhibiteur de soudure par diffusion sur les zones de l'une des deux tôles d'aluminium destinées à former les canaux d'acheminement du fluide caloporteur. Lors d'une étape ultérieure de soudure des deux tôles au niveau des zones dépourvues d'agent inhibiteur de soudure, on forme les canaux d'acheminement du circuit de fluide caloporteur. L'application d'une haute pression entre les deux tôles d'aluminium permet l'ouverture de tubes aptes à recevoir le fluide caloporteur d'un circuit de fluide caloporteur. Un tel dispositif d'échange thermique est formé d'une première plaque adaptée pour s'étendre en regard de l'espace extérieur de l'aéronef et permettre un échange thermique avec l'atmosphère et d'une deuxième plaque s'étendant en regard de la plaque de support. Un tel dispositif d'échange thermique comprend en outre :
- au moins un organe de distribution de fluide caloporteur dans les tubes, ledit organe de distribution étant en communication de fluide avec l'entrée de fluide caloporteur du dispositif d'échange thermique, et ;
- au moins un organe de collecte de fluide caloporteur refroidi dans le dispositif d'échange thermique et en communication de fluide avec la sortie de fluide caloporteur du circuit de fluide caloporteur.

Un dispositif d'échange thermique selon la deuxième variante peut aussi comprendre un organe intermédiaire de collecte du fluide caloporteur en sortie des tubes d'une première série de tubes et de distribution de ce fluide caloporteur dans les tubes d'une deuxième série de tubes.

Dans une troisième variante non représentée d'un panneau de fuselage selon l'invention, le dispositif d'échange thermique peut être formé d'un tube unique replié en serpentin s'étendant entre l'entrée de fluide caloporteur et la sortie de fluide caloporteur et dans lequel s'écoule le fluide caloporteur. Dans cette troisième variante, le dispositif d'échange thermique ne comporte pas d'organe intermédiaire et/ou d'organe de distribution et/ou d'organe de collecte.

Dans une quatrième variante non représentée d'un panneau de fuselage selon l'invention, le dispositif d'échange thermique -dit dispositif « plaque et intercalaire »- est formé de deux tôles ou plaques d'alliage d'aluminium soudées en regard l'une de l'autre sur les deux faces principales d'une pièce intercalaire d'écartement des deux tôles d'alliage d'aluminium. La pièce intercalaire d'écartement peut être de forme quelconque, en particulier de forme ondulée présentant en section droite transversale une forme sensiblement sinusoïdale ou une forme en vague carrée. La pièce intercalaire d'écartement peut présenter en section droite longitudinale une forme sinusoïdale ou une forme en vague carrée ou autre. Une telle pièce intercalaire d'écartement permet une amélioration du transfert thermique et limite la déformation des tôles d'alliage d'aluminium exposées au fluide caloporteur circulant sous pression.

Un dispositif d'échange thermique selon cette quatrième variante de l'invention comprend en outre un joint périphérique d'étanchéité s'étendant entre les deux tôles d'alliage d'aluminium adapté pour maintenir une circulation de fluide caloporteur entre les tôles ou plaques d'alliage d'aluminium. Un dispositif d'échange thermique selon cette quatrième variante de l'invention comprend aussi au moins un oeillet traversant ledit dispositif d'échange thermique et adapté pour recevoir un boulon -notamment un tirant- de serrage radial du dispositif d'échange thermique sur la plaque de support.

Bien entendu, cette description est donnée à titre d'exemple illustratif uniquement et l'homme du métier pourra y apporter de nombreuses modifications, variantes et applications sans sortir de la portée de l'invention, telle que définie par les revendications, comme par exemple les matériaux constitutifs du dispositif d'échange thermique et de la plaque de support, les dimensions et les formes du dispositif de fixation et du panneau de carrosserie.

## Revendications

1. Panneau (1) de carrosserie pour véhicule de transport comprenant un dispositif (6) d'échange thermique, ledit panneau (1) de carrosserie présentant une plus petite dimension, dite épaisseur, s'étendant dans une première direction, dite direction (50) radiale, et deux plus grandes dimensions s'étendant dans deux directions perpendiculaires entre elles et perpendiculaires à la direction (50) radiale,
ledit panneau (1) comprenant une plaque (2) de support présentant une première face, dite face (3) interne, principale destinée à être en contact avec un espace (15) intérieur du véhicule de transport et une deuxième face, dite face (4) externe, opposée à ladite face (3) interne ;
le dispositif (6) d'échange thermique est fixé sur la plaque (2) de support par un dispositif (9) de fixation et s'étend sur ladite face (4) externe de la plaque (2) de support et de façon à s'étendre au contact d'un milieu (5) extérieur du véhicule de transport, ledit dispositif (6) d'échange thermique étant conformé pour permettre une circulation d'un fluide (7) caloporteur dans un circuit (8) de fluide caloporteur entre au moins une entrée (11) de fluide caloporteur du dispositif (6) d'échange thermique et au moins une sortie (12) de fluide (7) caloporteur du dispositif (6) d'échange thermique et pour permettre une dissipation de chaleur du fluide (7) caloporteur vers le milieu (5) extérieur du véhicule de transport ;
**caractérisé en ce que** la plaque (2) de support forme, sur sa face (4) externe, un renfoncement (10) s'étendant dans l'épaisseur de la plaque (2) de support, ledit renfoncement (10) étant adapté pour recevoir le dispositif (6) d'échange thermique et de façon que le dispositif (6) d'échange thermique ne s'étende pas au-delà du profil général de la carrosserie du véhicule de transport.

2. Panneau (1) selon la revendication 1, **caractérisé en ce que** la plaque (2) de support est formée d'un matériau composite comprenant une âme (33) en nid d'abeille s'étendant entre deux peaux (34) rigides.

3. Panneau (1) selon l'une des revendications 1 ou 2, **caractérisé en ce que** la plaque (2) de support comprend au moins un organe de fixation de la plaque (2) de support sur une structure primaire du véhicule de transport.

4. Panneau (1) selon l'une des revendications 1 à 3, **caractérisé en ce que** la plaque (2) de support présente au moins un orifice (45) de passage d'au moins un conduit du circuit (8) de fluide (7) caloporteur au travers de la plaque (2) de support, ledit conduit étant adapté pour pouvoir mettre en communication de fluide l'entrée (11) de fluide (7) caloporteur et la sortie (12) de fluide (7) caloporteur du dispositif (6) d'échange thermique avec le circuit (8) de fluide caloporteur.

5. Panneau (1) selon l'une des revendications 1 à 4, **caractérisé en ce que** le dispositif (6) d'échange thermique comprend :
- au moins un canal (19) en communication de fluide (7) caloporteur avec le circuit (8) de fluide caloporteur d'un aéronef (30) et s'étendant entre l'entrée (11) et la sortie (12) de fluide, chaque canal (19) présentant en section droite transversale une forme polygonale, et ;
- une plaque (20) thermo-conductrice s'étendant solidaire et au contact des canaux (19) sur une première face (21) principale et au contact du milieu (5) extérieur de l'aéronef (30) sur une deuxième face (22) principale opposée à ladite première face (21) principale.

6. Panneau (1) selon la revendication 5, **caractérisé en ce que** la plaque (20) thermo-conductrice est formée d'un matériau choisi dans le groupe formé des alliages d'aluminium.

7. Panneau (1) selon l'une des revendications 5 ou 6, **caractérisé en ce que** la plaque (20) thermo-conductrice est solidaire de parois longitudinales du(des) canaux (19) par brasage.

8. Panneau (1) selon l'une des revendications 1 à 4, **caractérisé en ce que** le dispositif (6) d'échange thermique comprend :
- une plaque métallique ondulée, dite plaque métallique intérieure, adaptée pour pouvoir s'étendre en regard de la face (4) externe de la plaque (2) de support, et ;
- une plaque métallique extérieure sensiblement plane et adaptée pour pouvoir s'étendre au contact du milieu (5) extérieur de l'aéronef (30) ;
lesdites plaques métalliques intérieure et extérieure étant liées l'une à l'autre par brasage de façon à former une pluralité de canaux (19) en communication de fluide (7) caloporteur avec le circuit (8) de fluide (7) caloporteur de l'aéronef (30) et s'étendant entre l'entrée (11) et la sortie (12) de fluide (7) caloporteur.

9. Panneau (1) selon l'une des revendications 1 à 4, **caractérisé en ce que** le dispositif (6) d'échange thermique comprend :
- une première plaque (26) métallique adaptée pour pouvoir s'étendre en regard de la face (4) externe de la plaque (2) de support ;
- une deuxième plaque (27) métallique, et ;
s'étendant solidaire entre la première plaque (26) métallique et la deuxième plaque (27) métallique, une pièce (28) intercalaire adapté pour pouvoir maintenir la première plaque (26) métallique et la deuxième plaque (27) métallique écartée l'une par rapport à l'autre et pour permettre une circulation du fluide (7) caloporteur entre l'entrée (11) de fluide (7) caloporteur et la sortie (12) de fluide (7) caloporteur.

10. Panneau (1) selon l'une des revendications 1 à 9, **caractérisé en ce qu'**il présente une face (29) principale destinée à s'étendre au contact du milieu (5) extérieur d'un aéronef (30) de forme arrondie convexe et présentant en section dans au moins un plan radial -notamment dans chacun des plans radiaux-comprenant la direction (50) radiale du panneau (1) de fuselage une courbure adaptée pour préserver l'aérodynamisme de l'aéronef (30).

11. Panneau (1) selon l'une des revendications 1 à 10, **caractérisé en ce que** le dispositif (9) de fixation du dispositif (6) d'échange thermique sur la plaque (2) de support comprend des brides de fixation réparties à la surface du dispositif d'échange thermique et maintenant rigidement le dispositif d'échange thermique par rapport à la plaque de support.

12. Panneau (1) selon la revendication 11, **caractérisé en ce que** chaque bride (9) de fixation comprend :
- un jeu tangentiel autorisant des déplacements relatifs du dispositif (6) d'échange thermique par rapport à la plaque (2) de support selon une direction tangentielle perpendiculaire à ladite direction radiale,
- un dispositif (14) de serrage radial appliquant au moins une face tangentielle solidaire du dispositif (6) d'échange thermique et au moins une face tangentielle solidaire de la plaque (2) de support en appui l'une sur l'autre avec une précontrainte en compression choisie de façon à produire un frottement statique du dispositif (6) d'échange thermique sur la plaque (2) de support :
∘ suffisant pour maintenir en fonctionnement le dispositif (6) d'échange thermique fixe par rapport à la plaque (2) de support,
∘ autorisant les déplacements relatifs tangentiels du dispositif (6) d'échange thermique par rapport à la plaque (2) de support grâce au jeu tangentiel sous l'effet des dilatations thermiques différentielles entre le dispositif (6) d'échange thermique et la plaque (2) de support.

13. Véhicule de transport comprenant un panneau (1) selon l'une des revendications 1 à 12.

## Patentansprüche

1. Karosserieplatte (1) für ein Transportfahrzeug, umfassend eine Vorrichtung (6) zum Wärmetausch, wobei die Karosserieplatte (1) eine kleinere Abmessung, genannt Dicke, aufweist, die sich in eine erste Richtung, genannt radiale Richtung (50), erstreckt, und zwei größere Abmessungen, die sich in zwei zueinander senkrechte und zur radialen Richtung (50) senkrechte Richtung (50) erstrecken,
wobei die Platte (1) eine Trägertafel (2) umfasst, die eine erste Hauptseite, genannt Innenseite (3) aufweist, die dazu bestimmt ist, mit einem Innenraum (15) des Transportfahrzeugs in Kontakt zu stehen, und eine zweite Seite, genannt Außenseite (4), die der Innenseite (3) gegenüberliegt;
wobei die Vorrichtung (6) zum Wärmetausch auf der Trägertafel (2) durch eine Befestigungsvorrichtung (9) befestigt ist und sich auf der Außenseite (4) der Trägertafel (2) erstreckt und derart, dass sie sich in Kontakt mit einem Außenmedium (5) des Transportfahrzeugs erstreckt, wobei die Vorrichtung (6) zum Wärmetausch ausgelegt ist, um eine Zirkulation eines Wärmeträgerfluids (7) in einem Kreislauf (8) von Wärmeträgerfluid zwischen mindestens einem Eingang (11) von Wärmeträgerfluid der Vorrichtung (6) zum Wärmetausch und mindestens einem Ausgang (12) von Wärmeträgerfluid (7) der Vorrichtung (6) zum Wärmetausch zu ermöglichen, und um eine Dissipation von Wärme des Wärmeträgerfluids (7) hin zum Außenmedium (5) des Transportfahrzeugs zu ermöglichen;
**dadurch gekennzeichnet, dass** die Trägertafel (2) auf ihrer Außenseite (4) eine Verstärkung (10) bildet, die sich in der Dicke der Trägertafel (2) erstreckt, wobei die Verstärkung (10) angepasst ist, um die Vorrichtung (6) zum Wärmetausch aufzunehmen, und derart, dass sich die Vorrichtung (6) zum Wärmetausch nicht über das allgemeine Profil der Karosserie des Transportfahrzeugs erstreckt.

2. Platte (1) nach Anspruch 1, **dadurch gekennzeichnet, dass** die Trägertafel (2) aus einem Verbundmaterial gebildet ist, umfassend einen Kern (33) aus Wabenstruktur, der sich zwischen zwei starren Hüllen (34) erstreckt.

3. Tafel (1) nach einem der Ansprüche 1 oder 2, **dadurch gekennzeichnet, dass** die Trägertafel (2) mindestens ein Organ zur Befestigung der Trägertafel (2) auf einer primären Struktur des Transportfahrzeugs umfasst.

4. Platte (1) nach einem der Ansprüche 1 bis 3, **dadurch gekennzeichnet, dass** die Trägertafel (2) mindestens eine Öffnung (45) zum Durchgang von mindestens einer Leitung des Kreislaufs (8) des Wärmeträgerfluids (7) durch die Trägertafel (2) aufweist, wobei die Leitung angepasst ist, um den Eingang von Wärmeträgerfluid (7) und den Ausgang (12) von Wärmeträgerfluid der Vorrichtung (6) zum Wärmetausch mit dem Kreislauf (8) von Wärmeträgerfluid in fluidische Kommunikation bringen zu können.

5. Tafel (1) nach einem der Ansprüche 1 bis 4, **dadurch gekennzeichnet, dass** die Vorrichtung (6) zum Wärmetausch Folgendes umfasst:
- mindestens einen Kommunikationskanal (19) von Wärmeträgerfluid (7) mit dem Kreislauf (8) von Wärmeträgerfluid eines Flugzeugs (30), der sich zwischen dem Eingang (11) und dem Ausgang (12) von Fluid erstreckt, wobei jeder Kanal (19) im geraden Querschnitt eine polygonale Form aufweist, und;
- eine wärmeleitende Tafel (20), die sich fest verbunden und in Kontakt mit den Kanälen (19) auf eine erste Hauptseite (21) und in Kontakt mit dem Außenmedium (5) des Flugzeugs (30) auf eine zweite Hauptseite (22) gegenüber der ersten Hauptseite (21) erstreckt.

6. Platte (1) nach Anspruch 5, **dadurch gekennzeichnet, dass** die wärmeleitende Tafel (20) aus einem Material gebildet ist, ausgewählt aus der Gruppe, gebildet aus Aluminiumlegierungen.

7. Platte (1) nach einem der Ansprüche 5 oder 6, **dadurch gekennzeichnet, dass** die wärmeleitende Tafel (20) fest mit Längswänden des Kanals / der Kanäle (19) durch Lötung verbunden ist.

8. Platte (1) nach einem der Ansprüche 1 bis 4, **dadurch gekennzeichnet, dass** die Vorrichtung (6) zum Wärmetausch Folgendes umfasst:
- eine gewellte metallische Tafel, genannt innere metallische Tafel, die angepasst ist, um sich mit Bezug auf die Außenseite (4) der Trägertafel (2) zu erstrecken, und;
- eine äußere metallische Platte, die im Wesentlichen eben und angepasst ist, um sich in Kontakt mit dem Außenmedium (5) des Flugzeugs (30) zu erstrecken;
wobei die innere und äußere metallische Tafel miteinander durch Lötung verbunden sind, um eine Vielzahl von Kommunikationskanälen (19) von Wärmeträgerfluid (7) mit dem Kreislauf (8) von Wärmeträgerfluid (7) des Flugzeugs (30) zu bilden und sich zwischen dem Eingang (11) und dem Ausgang (12) des Wärmeträgerfluids (7) erstrecken.

9. Platte (1) nach einem der Ansprüche 1 bis 4, **dadurch gekennzeichnet, dass** die Vorrichtung (6) zum Wärmetausch Folgendes umfasst:
- eine erste metallische Platte (26), die angepasst ist, um sich mit Bezug auf die Außenseite (4) der Trägertafel (2) zu erstrecken;
- eine zweite metallische Platte (27), und;
sich zwischen der ersten metallischen Platte (26) und der zweiten metallischen Platte (27) fest verbunden erstreckend, einen Abstandhalter (28), der angepasst ist, um die erste metallische Platte (26) und die zweite metallische Platte (27) mit Bezug aufeinander beabstandet zu halten und um eine Zirkulation des Wärmeträgerfluids (7) zwischen dem Eingang (11) von Wärmeträgerfluid (7) und dem Ausgang (12) von Wärmeträgerfluid zu ermöglichen.

10. Platte (1) nach einem der Ansprüche 1 bis 9, **dadurch gekennzeichnet, dass** sie eine Hauptseite (29) aufweist, die dazu bestimmt ist, sich in Kontakt mit dem Außenmedium (5) eines Flugzeugs (30) in konvexer gerundeter Form zu erstrecken und im Schnitt auf mindestens einer radialen Ebene - insbesondere in jeder der radialen Ebenen - umfassend die radiale Richtung (50) der Platte (1) des Rumpfes, eine Krümmung aufweist die angepasst ist, um die Aerodynamik des Flugzeugs (30) beizubehalten.

11. Platte (1) nach einem der Ansprüche 1 bis 10, **dadurch gekennzeichnet, dass** die Vorrichtung (9) zur Befestigung der Vorrichtung (6) zum Wärmetausch auf der Trägertafel (2) Befestigungsflansche umfasst, die auf der Oberfläche der Vorrichtung zum Wärmetausch verteilt sind und die Vorrichtung zum Wärmetausch mit Bezug auf die Trägertafel steifhalten.

12. Platte (1) nach Anspruch 11, **dadurch gekennzeichnet, dass** jeder Befestigungsflansch (9) Folgendes umfasst:
- ein tangentiales Spiel, das relative Bewegungen der Vorrichtung (6) zum Wärmetausch mit Bezug auf die Trägertafel (2) in einer senkrechten tangentialen Richtung zur radialen Richtung zulässt.
- eine Vorrichtung (14) zum radialen Festspannen, die mindestens eine tangentiale Seite, die fest mit der Vorrichtung (6) zum Wärmetausch verbunden ist, und mindestens eine tangentiale Seite, die fest mit der Trägertafel (2) verbunden ist, in Auflage aufeinander mit einer Kompressionsvorspannung anwendet, die derart ausgewählt ist, um eine statische Reibung der Vorrichtung (6) zum Wärmetausch auf der Trägertafel (2) zu erzeugen:
- die ausreichend ist, um in Betrieb die Vorrichtung (6) zum Wärmetausch mit Bezug auf die Trägertafel (2) befestigt zu halten,
- die relativen tangentialen Bewegungen der Vorrichtung (6) zum Wärmetausch mit Bezug auf die Trägertafel (2) dank des tangentialen Spiels unter der Einwirkung der differentialen thermischen Dilatationen zwischen der Vorrichtung (6) zum Wärmetausch und der Trägertafel (2) zuzulassen.

13. Transportfahrzeug, umfassend eine Platte (1) nach einem der Ansprüche 1 bis 12.

## Claims

1. Body panel (1) for a transport vehicle comprising a heat exchange device (6), said body panel (1) having a smaller dimension, named the thickness, extending in a first direction, named the radial direction (50), and two larger dimensions extending in two directions perpendicular to one another and perpendicular to the radial direction (50),
said panel (1) comprising a supporting plate (2) having a first main face, named the inner face (3), intended to be in contact with an internal space (15) of the transport vehicle and a second face, named the outer face (4), opposite said inner face (3);
the heat exchange device (6) is fastened to the supporting plate (2) by a fastening device (9) and extends on said outer face (4) of the supporting plate (2) and so as to extend in contact with an external environment (5) of the transport vehicle, said heat exchange device (6) being shaped to allow a circulation of a heat transfer fluid (7) in a heat transfer fluid circuit (8) between at least one heat transfer fluid inlet (11) of the heat exchange device (6) and at least one heat transfer fluid (7) outlet (12) of the heat exchange device (6) and to allow a dissipation of heat of the heat transfer fluid (7) to the external environment (5) of the transport vehicle;
**characterised in that** the supporting plate (2) forms, on its outer face (4), an indentation (10) extending in the thickness of the supporting plate (2), said indentation (10) being adapted to receive the heat exchange device (6) and so that the heat exchange device (6) does not extend beyond the general profile of the body of the transport vehicle.

2. Panel (1) according to Claim 1, **characterised in that** the supporting plate (2) is formed of a composite material comprising a honeycomb core (33) extending between two rigid skins (34).

3. Panel (1) according to one of Claims 1 or 2, **characterised in that** the supporting plate (2) comprises at least one fastening member for fastening the supporting plate (2) to a primary structure of the transport vehicle.

4. Panel (1) according to one of Claims 1 to 3, **characterised in that** the supporting plate (2) has at least one orifice (45) for the passage of at least one conduit of the heat transfer fluid (7) circuit (8) through the supporting plate (2), said conduit being adapted to be able to put in fluid communication the heat transfer fluid (7) inlet (11) and the heat transfer fluid (7) outlet (12) of the heat exchange device (6) with the heat transfer fluid circuit (8).

5. Panel (1) according to one of Claims 1 to 4, **characterised in that** the heat exchange device (6) comprises:
- at least one channel (19) in heat transfer fluid (7) communication with the heat transfer fluid circuit (8) of an aircraft (30) and extending between the fluid inlet (11) and the fluid outlet (12), each channel (19) having a polygonal shape in transverse cross-section, and;
- a heat-conducting plate (20) extending secured and in contact with the channels (19) on a first main face (21) and in contact with the external environment (5) of the aircraft (30) on a second main face (22) opposite said first main face (21).

6. Panel (1) according to Claim 5, **characterised in that** the heat-conducting plate (20) is formed of a material chosen from the group formed of aluminium alloys.

7. Panel (1) according to one of Claims 5 or 6, **characterised in that** the heat-conducting plate (20) is secured to longitudinal walls of the channel(s) (19) by brazing.

8. Panel (1) according to one of Claims 1 to 4, **characterised in that** the heat exchange device (6) comprises:
- a corrugated metal plate, named the inner metal plate, adapted to be able to extend facing the outer face (4) of the supporting plate (2), and;
- a substantially plane outer metal plate adapted to be able to extend in contact with the external environment (5) of the aircraft (30);
said inner and outer metal plates being connected to one another by brazing so as to form a plurality of channels (19) in heat transfer fluid (7) communication with the heat transfer fluid (7) circuit (8) of the aircraft (30) and extending between the heat transfer fluid (7) inlet (11) and the heat transfer fluid (7) outlet (12).

9. Panel (1) according to one of Claims 1 to 4, **characterised in that** the heat exchange device (6) comprises:
- a first metal plate (26) adapted to be able to extend facing the outer face (4) of the supporting plate (2);
- a second metal plate (27), and;
extending secured between the first metal plate (26) and the second metal plate (27), an interlay part (28) adapted to be able to keep the first metal plate (26) and the second metal plate (27) spaced with respect to one another and to allow a circulation of the heat transfer fluid (7) between the heat transfer fluid (7) inlet (11) and the heat transfer fluid (7) outlet (12).

10. Panel (1) according to one of Claims 1 to 9, **characterised in that** it has a main face (29) intended to be extended in contact with the external environment (5) of a aircraft (30) of rounded convex shape and having in section in at least one radial plane -especially in each of the radial planes-comprising the radial direction (50) of the fuselage panel (1) a curvature adapted to preserve the aerodynamic behaviour of the aircraft (30).

11. Panel (1) according to one of Claims 1 or 10, **characterised in that** the fastening device (9) for fastening the heat exchange device (6) to the supporting plate (2) comprises fastening ties distributed at the surface of the heat exchange device and holding the heat exchange device rigidly with respect to the supporting plate.

12. Panel (1) according to Claim 11, **characterised in that** each fastening tie (9) comprises:
- a tangential clearance allowing relative movements of the heat exchange device (6) with respect to the supporting plate (2) in a tangential direction perpendicular to said radial direction,
- a radial clamping device (14) applying at least one tangential face secured to the heat exchange device (6) and at least one tangential face secured to the supporting plate (2) to bear on one another with a prestress in compression chosen so as to produce a static friction of the heat exchange device (6) on the supporting plate (2):
∘ sufficient to keep in operation the heat exchange device (6) fixed with respect to the supporting plate (2),
∘ allowing the tangential relative movements of the heat exchange device (6) with respect to the supporting plate (2) by virtue of the tangential clearance under the effect of the differential thermal expansions between the heat exchange device (6) and the supporting plate (2).

13. Transport vehicle comprising a panel (1) according to one of Claims 1 to 12.
